# EUROPEAN PATENT APPLICATION

(11) **EP 1 617 647 A1**
(43) Date of publication of application: **18.01.2006**
(21) Application number: 05254233.9
(22) Date of filing: 06.07.2005
(51) Int. Cl.: H04N 1/60

(54) **Area coverage modulation image forming method**

(30) Priority: 12.07.2004 JP 2004204749
(71) Applicant: Konica Minolta Medical & Graphic, Inc., Tokyo 163-0512 (JP)
(72) Inventor: Tanaka, Shigeo, Konica Minolta Med. & Graphic, Inc, Hino-shi Tokyo 191-8511 (JP); Shinotsuka, Shin Konica Minolta Med. & Graphic Inc, Hino-shi Tokyo 191-8511 (JP)
(74) Representative: Rees, Alexander Ellison

(57) **Abstract**

An image forming method includes a first process for outputting a first image from a first output device, using a group of 1 bit data of respective dots of an area coverage modulation image, and a second process for outputting another image from another output device with an output method different from an output method for the first output device, using the group, wherein the second process includes a halftone-dot percentage adjusting step of adjusting a halftone-dot percentage of a halftone-dot included in the area coverage modulation image, and a color adjusting step of adjusting a color of each dot of the halftone-dot, the other image being approximated to the first image.

## Description

This application is based on Japanese Patent Application No. 2004-204749 filed on July 12, 2004, in Japanese Patent Office, the entire content of which is hereby incorporated by reference.

### FIELD OF THE INVENTION

The present invention relates to an image forming method of forming an area coverage modulation image as a color proof of a print. The invention particularly relates to an image forming method of obtaining a color proof which is approximated to a print, based on binary format images having been binarized for respective separate plates and dots for a printing machine.

### BACKGROUND OF THE INVENTION

In recent years, print documents are produced as digital data on computers, and area coverage modulation images for printing are commonly formed through a RIP. In typical color printing, area coverage modulation images for printing with at least four plates of colors of cyan (C), magenta (M), yellow (Y), and black (K) are produced from a print document, namely, print document data through a RIP to be used for printing.

Each area coverage modulation image is arranged as a group of dots (pixels), wherein the modulations of the image are represented by the sizes of halftone dot areas. Each dot is provided with 1 bit data (binary), which indicates whether the dot is one in a halftone dot area where ink is to be put, on a corresponding print, or one in a hole area where no ink is to be put.

Incidentally, it is wasteful to perform adjustment of printing plates after producing the plates and trial printing with them. Therefore, usually, before producing printing plates, the same area coverage modulation images as those of a print are output and a proof for checking the finishing of characters or colors in the print is produced.

A proof is produced by an image forming device referred to as a proofer with a different output method from that for a printing machine. In this situation, used are area coverage modulation images prepared through a RIP which is adjusted for proofing and different from a RIP for printing. This is because while halftone dots grow by a printing machine to cause dot gains, the same dot gains are not necessarily caused with an image forming device with a different output method, or because color developing characteristics are different due to the difference in coloring materials between the two. Therefore, a print document created on a computer is transmitted both to a RIP for printing and a RIP for proof in order to generate respective area coverage modulation images.

However, as a result, when the overall image quality of a proof obtained from an image forming device and that of a print were made almost the same, shapes or sizes of halftone dots in detail portions were sometimes different. Further, when the colors (solid color) of solid areas with a halftone dot of 100% in a proof were adjusted, there was a deviation of colors in areas with a halftone dot percentage of approximately 50%. Accordingly, the colors of the solid areas were sometimes deviated to achieve a balance. Further, the difference in RIPs sometimes causes human errors such as errors in setting fonts to be designated or errors in setting halftone dot shapes.

An image proof method is disclosed by which dot gains in printing can be expressed by another output device, using the same area coverage modulation image as that for a printing machine (for example, see Patent Document 1). Specifically, a proof method for halftone bitmap image is disclosed which includes the steps of providing a halftone bitmap image, estimating dot halftone percentage, calculating dot halftone percentage to be a target by a certain color proofing function, calculating the quantity of dots N which performs conversion between ON state and OFF state to form a corrected image, and converting On state and Off state of the dots in the quantity of N. In this method, a proof image which has the same halftone-dot percentage as the print can be obtained by properly setting the color proofing function.

However, in this method, only adjustment of the sizes of halftone dots is carried out, and deviation of solid colors due to the difference between coloring materials cannot be corrected. For example, when a silver halide photosensitive material is employed as the coloring material, if the mechanical size of halftone dots and the halftone percentage measured from the density are adjusted to those of a print, the density of a solid area of a proof drops only to produce a proof with an image quality having low contrast.

Although RIPs are not described, there is also offered a method of forming an area coverage modulation image by controlling the density and the dot gain independently from each other with light exposure, wherein a silver halide photosensitive material is employed as the coloring material (for example, see Patent Document 2).
[Patent Document 1] TOKKAI No. 2004-40781
[Patent Document 2] TOKKAI No. 2002-341470

An object of the invention is to provide an image forming method in which an area coverage modulation image used to produce a first image (for example, a print) is commonly used to be able to produce another image (for example, a proof) which has the same halftone dot structure and density of solid colors as the first image, wherein the same image quality can be reproduced.

### SUMMARY OF THE INVENTION

In an aspect of the invention, an image forming method includes a first process for outputting a first image from a first output device, using a group of 1 bit data of respective dots of an area coverage modulation image, and a second process for outputting another image from another output device by an output method different from an output method for the first output device, using the group, wherein the second process includes a halftone-dot percentage adjusting step of adjusting a halftone-dot percentage of a halftone-dot included in the area coverage modulation image, and a color adjusting step of adjusting a color of each dot of the halftone-dot, the other image being approximated to the first image.

### BRIEF DESCRIPTION OF THE DRAWINGS

Fig. 1 is a block diagram showing an example of a system which can perform an image forming method in accordance with the invention;
Fig. 2 is a diagram showing overprint of color plates for each color which can be expressed by a printing machine;
Fig. 3 is a conceptual diagram showing an example of a data structure of an area coverage modulation image;
Fig. 4 is a schematic diagram showing an example of an area coverage modulation image related to one of plates;
Fig. 5 is a flowchart showing a schematic processing flow in an image forming apparatus;
Fig. 6 is a conceptual diagram showing an example of a halftone percent table;
Fig. 7 is a diagram showing an example of a dot gain curve for halftone-dot percentage;
Fig. 8 is a conceptual diagram showing an example of a dot gain table;
Fig. 9 is a conceptual diagram showing an example of a filter;
Fig. 10 is a conceptual diagram showing an example of a table identifying boundary dots;
Fig. 11 is a conceptual diagram showing an example of an added dot-row quantity table;
Fig. 12 is a schematic diagram showing an example of an area coverage modulation image with reflected dot gains;
Fig. 13 is a conceptual diagram showing an example of a lookup table;
Fig. 14 is a conceptual diagram showing an example of an exposure-light table;
Fig. 15 is a conceptual diagram showing an example of a magnification rate table;
Fig. 16 is a schematic diagram showing an example of an area coverage modulation image for which the image quality has been adjusted; and
Fig. 17 is a conceptual diagram showing an example of a light-exposure table.

### DETAILED DESCRIPTION OF THE PREFERRED EMBODIMENT

First, preferable structures in accordance with the invention to attain an object as described above will be described below.

An image forming method includes a first process for outputting a first image from a first output device, using a group of 1 bit data, each 1 bit data corresponding to a dot being a part of an area coverage modulation image; and a second process for outputting another image, using the above described group, from another output device with an output method different from an output method of the first output device, the second process including a halftone-dot percentage adjusting step of adjusting a halftone-dot percentage of a halftone-dot included in the area coverage modulation image and a color adjusting step of adjusting a color of each dot being a part of the halftone-dot, wherein the other image is approximated to the first image.

Herein, preferably at least two colors are employable at the respective dots for at least one color of the first image. Further, one of the two colors preferably is approximately the same color as at least that of the one color of the first image. Still further, dots of the other one of the two colors are preferably located adjacent to a boundary of the halftone-dot.

Further, preferably, the adjusting of the halftone-dot percentage in the second process is performed, corresponding to the halftone-dot percentage. Still further, the adjusting of the other color in the second process is performed, according to a multiplication factor applied to a color of a halftone-dot percentage of 100%. Yet further, the first output device employs ink as a coloring material of the first image, and the other output device employs a silver halide photosensitive material as a coloring material of the other image.

Using the same group of 1 bit data as used for the first image, it is possible to obtain another image in which the approximately same halftone-dot structure as in the first image and the approximately same visual color of a solid color area as in the first image are reproduced. Further, in the other image, the image quality is the same as that of the first image. In other words, it is possible to strike a good balance between the optimization of visual image quality and the optimization of colorimetric image quality.

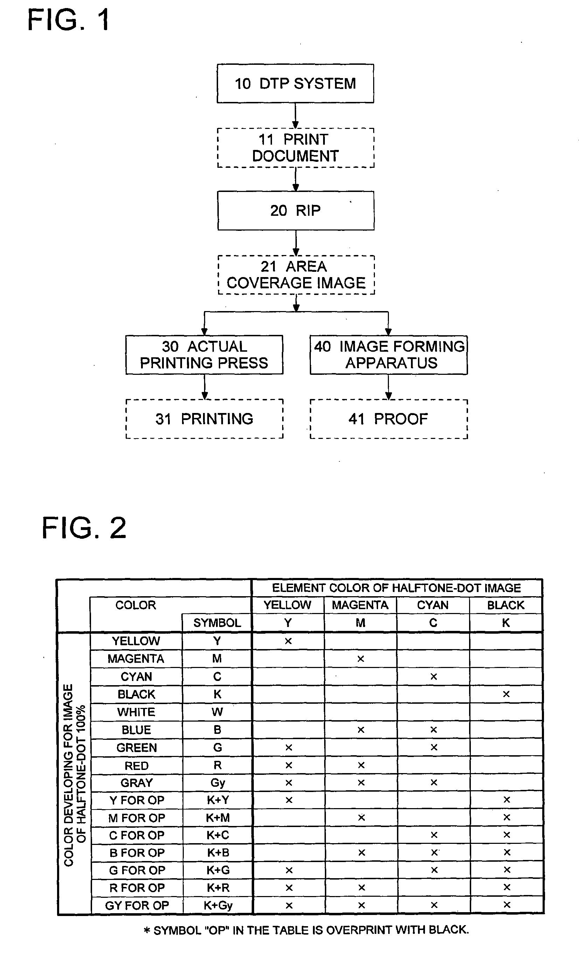

Now, a preferred embodiment of the invention will be described, referring to the drawings. Fig. 1 is a diagram showing an entire processing flow in a case where an image forming method in accordance of with the invention is carried out. Fig. 1 shows a case where a printing machine 30 is employed as an example of the first output device, and an image forming apparatus called proofer is employed as another output device. Herein, a print 31 is employed as an example of the first image, and a proof 41 is employed as an example of another image. Further, as an example of a group of 1 bit data each of which is for a respective dot being a part of an area coverage modulation image, employed is a group 21 of 1 bit data obtained in such a manner that a print document produced by a DTP system 10 is print-separated and binarized by a RIP 20. Herein, the example of the first process is a process for obtaining the print 31 from a print document 11, and the example of the second process is a process for obtaining the proof 41 from the print document 11.

In the processing flow in Fig. 1, first, the print document 11 is produced by a computer. As the computer, a DTP (Desk Top Publishing) system 10 which employs a description language Postscript is widely used. The print document 11 is produced, for example, as a file such as a PDF (Portable Document Format) file, wherein the sentence part is constructed by a combination of text data and font data. Data of graphic parts for graphic display and format data are further combined to this to construct the whole.

The RIP 20 resolves the print document containing vector data which constructs the graphic, into element colors, and expands the print document into a bitmap data being a group of 1 bit data which can be printed and displayed. The bitmap data obtained by the RIP constructs an area coverage modulation image in order to perform modulation expression, according to the sizes of halftone dots (or cells) being a group of dots. A RIP process requires processing of a huge amount of data, and accordingly, is often implemented by a dedicated hardware configuration, but also may be implemented by software on a computer. Herein, even when the same print document is used, the same result is not necessarily obtained through different RIPs. It is possible that fonts mounted on RIPs or software versions are different. In such a way, unexpected errors may occur.

A group 21 of 1 bit data obtained through a RIP process 20 is transmitted as it is to the printing machine 30 and the image forming apparatus 40. Then, the print 31 and the proof 41 are obtained respectively from the printing machine 30 and the image forming apparatus 40. Herein, the processing in the RIP 20 is common to the printing machine 30 and the image forming apparatus 40. Therefore, the basic halftone dot structures including halftone dot shapes, line numbers, and the like are the same. However, on the other hand, in order to correspond to changes in colors, due to the difference in dot gains caused during printing and coloring materials, the image forming apparatus 40 performs the processing described below, referring to Figs. 2 to 16.

The printing machine 30 uses respective plates YMCK being process colors, and special plates, if necessary, and overprints the respective inks on a printing sheet in a predetermined order. The inks are overprinted to express various colors. For example, with the combination of YMCK, the respective 4 single colors, 11 colors by a combination of plural plates, and a white background, that is, total 16 colors are expressed.

Fig. 2 is a conceptual diagram of the above described bitmap data or the area coverage modulation image. This figure means that when plates of YMCK being process colors are used on a print, each solid color indicated on the row of the color name having a halftone percentage of 100% on the print is expressed by overprint of printing plates indicated by a sign "x" on the same line. Herein, "x" means overprinting of colors. It is assumed that expressions of colors of plates described in the following are in accordance with the description in Fig. 2. A special color plate may be arbitrarily added to them.

As an example of the image forming apparatus 40, a case will be described wherein a silver halide color photosensitive material is employed and the colors in the row of color names in Fig. 2 are developed by combinations of the respective color developing layers of Y, M, and C which are element colors of photosensitive materials. Such an image forming apparatus includes, for example, a conversion device for generating an area coverage modulation image, from a group 21 of 1 bit data, suitable for forming a proof, an output device for exposing a silver halide photosensitive material to light by a LED or the like by the use of an image having been output from the conversion device, and a developing device for developing the silver halide photosensitive material having been exposed to light by the output device. The conversion device is arranged on a general purpose computer of which control output is connected to the output device, and further, the output device is connected to the developing device.

In such an image forming apparatus, for the respective 15 colors excluding white (W), in Fig. 2, the light-exposure levels of the respective LEDs of R, G, and B on the respective element colors of the silver halide color photosensitive material are changed in multiple steps so that an almost continuous density change can be achieved. Thus, it is possible to correspond to the difference in various colors due to the difference in grades of inks or printing sheets.

However, the image forming apparatus is not limited as long as various colors can be expressed. For example, an image forming apparatus may be applied which expresses various colors by combination of dots in different colors. In order to clearly reproduce halftone dot shapes for improved plate proofing, an image forming apparatus adopting a silver halide photosensitive material is preferably used.

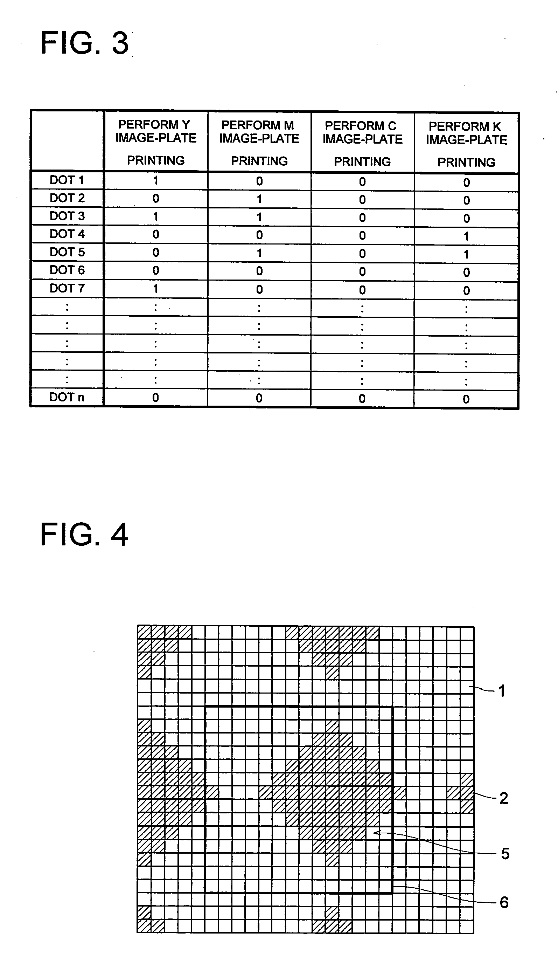

Fig. 3 is a conceptual diagram showing the data structure of a group of 1 bit data obtained by the RIP process. As shown in Fig. 3, 1 bit data is given to each dot to indicate whether to put (print) ink or not on the respective plates, wherein 1 bit data is "1 (to put ink)" or "0 (not to put ink)". Description will be given on one plate (for example Y plate) for simplification in the description below, and plural plates will be referred to, if necessary.

Fig. 4 is a schematic diagram showing a part of an area coverage modulation image of one plate. In Fig. 4, an image corresponding approximately to one in a case of a typical number of lines is shown. The image is constructed as a group of dots, wherein halftone dots 5 where ink is put are constructed by a group of dots 2 which are hatched to indicate that ink is put there. The frame 6 of an approximate square of thick lines indicates the region of an area in a size corresponding to a period with which the halftone dots appear. The processing for obtaining a halftone-dot percentage is performed with the region in the frame as reference.

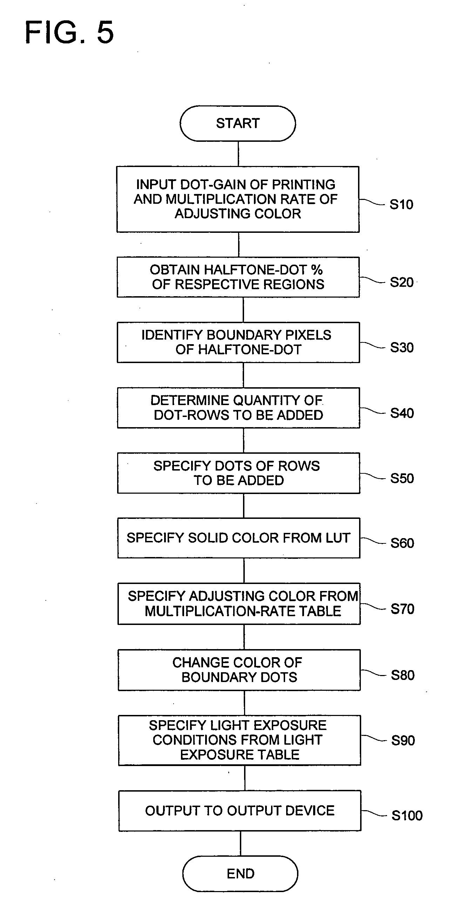

Fig. 5 shows a schematic flow of the processing performed by the image forming apparatus 40 in Fig. 1. First, a group 21 of 1 bit data through the RIP 20 is input to the image forming apparatus 40, and also, data of dot gain generated by printing, measured using a standard print, is input (S10). Herein, dot gains on a print are obtained in advance in the following manner. With a standard print, the densities of a white area of a halftone percentage of 0%, of a solid color area of a halftone percentage of 100%, and of an area of a halftone percentage of 50% which is the middle value, are optically measured respectively, and then an expansion amount of halftone-dots, on the print, of a halftone dot percentage of 50% in the area coverage modulation image on the standard print is calculated to obtain the dot gain on the print.

Further, a color level of an adjusting color for adjustment of a change in image quality due to the difference between coloring materials is input (S10). Herein, a color level is a code which specifies a multiplication factor for YMC densities of a solid color area of a proof. An adjusted color can be specified by such a code. A specified adjusted color is used to adjust the difference in image quality due to the difference in coloring materials between the print and the proof. The multiplication factors change with printing conditions (such as types of ink or paper characteristics), and are set in advance such that the image quality of a proof which is output from the image forming apparatus 40 by the use of the same area coverage modulation image as that for the standard print conforms to the image quality of the standard print. Therefore, if the printing conditions are specified, the multiplication factor is also specified.

A solid color of a halftone-dot 100% on the proof is set to conform to a solid color on the print as much as possible. Even in this manner, since a plurality of adjusting means is employed in this image forming method, no difference in image quality between the proof and the print is made. Hereinafter, the solid color may be referred to as a standard color in contrast to the above described adjusting color. If both the solid color and the halftone dot structure on the proof are made to conform to those on the print, it is difficult to adjust the difference in image quality due to the difference in coloring materials. However, the image quality can be adjusted by changing the color of the boundary pixels of a halftone dot from a standard color to an adjusting color. Herein, the multiplication factor described above is used. Details will be described later.

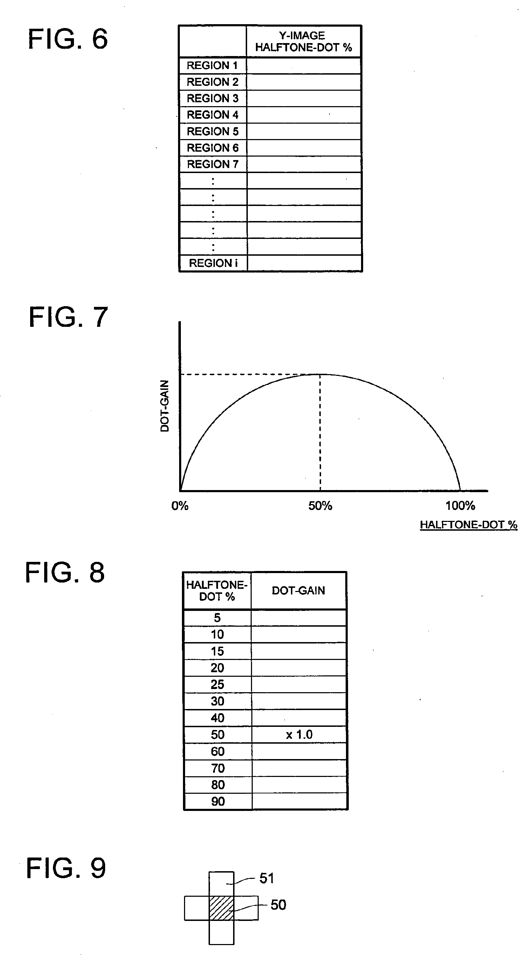

Next, halftone-dot percentages of images in respective regions 6 in Fig. 4 are obtained, using the group 21 of 1 bit data (S20). Specifically, an area coverage modulation image constructed by the group 21 of 1 bit data is divided into regions 6, each region including 14 x 14 = 196 pixels, as shown in Fig. 4, and thus having the same size. In each region 6, the ratio shared by dots (hatched) with 1 bit data of "1 (to put ink)" is obtained. For each region, the obtained halftone-dot percentage is defined as the halftone-dot percentage of the region and stored in a halftone-dot percentage table, shown in Fig. 6. Thus, image adjustment corresponding to halftone-dot percentages is achieved.

In such a manner, a halftone-dot percentage is obtained for each region of the area coverage modulation image, because a dot gain on a print changes with a halftone-dot percentage, as shown in Fig. 7, and it is necessary to adjust the area coverage modulation image, corresponding to the change. Herein, tone jump in the vicinity of halftone-dot 50 % is ignored to simplify the description. In order to prevent unintentional irregularities due to dividing the region 6, the moving average between regions may be obtained. Although the size of the region 6 can be enlarged or reduced, if the region is too large, the accuracy of obtaining the halftone-dot percentage is improved. However, the computation load increases, and further, sharpness of an image is degraded by the process of reducing the irregularities. On the other hand, if the region is too small, the computation load is low, but the adjustment accuracy is degraded. Therefore, preferably, the size of a region is set to approximately 60% of the size corresponding to the period (14 x 14 dots in this example) with which halftone-dots appear. Further, instead of defining a halftone-dot percentage for each region, halftone-dot percentages may be defined in such a manner that a region 6 is defined around each dot and a halftone-dot percentage is obtained in each region, then this halftone-dot percentage is defined as the halftone-dot percentage around the central dot. In this case, a halftone-dot percentage is defined for each dot.

Making the dot gain at the halftone-dot percentage of 50% on the standard print to be a reference, the dot gain having been input in step S10, dot gains are computed for respective halftone-dot percentages, according to a dot gain curve, in Fig. 7. Then, dot gains are stored in a dot gain table in Fig. 8 with an increment of halftone-dot percentage of 5%. In Fig. 8, "x 1.0" is described in the dot gain column on the line of halftone-dot percentage of 50%. This means that the dot gain data which was input in step S10 is multiplied by 1.0 and stored in this column. Values obtained from the curve in Fig. 7 are stored in the other columns.

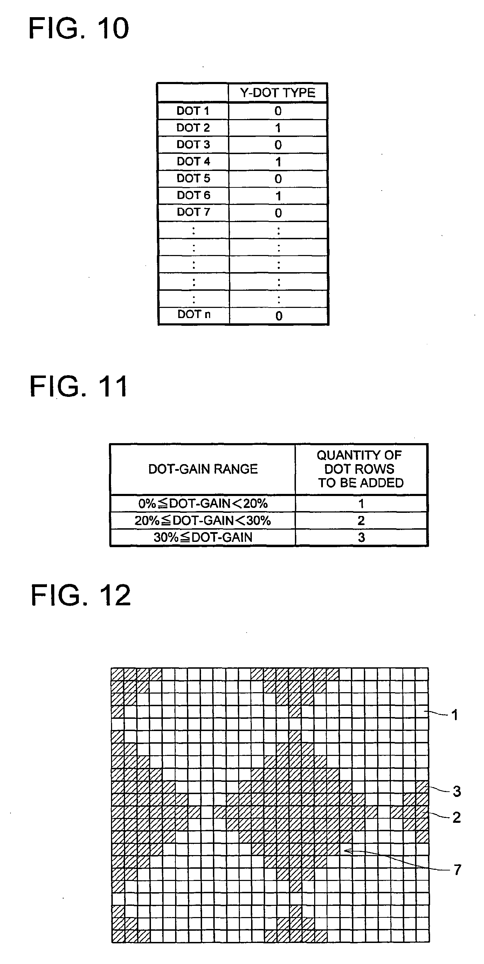

Next, boundary dots of halftone-dots are specified (S30). Boundary dots of halftone-dots are dots which are included in the respective halftone dots of the area coverage modulation image and located at the outermost periphery of the halftone dots. Specifically, a filter, shown in Fig. 9, is used, and if 1 bit data of a central dot 50 of the filter is "1 (to put ink)" and any one of 1 bit data of dots 51 for checking located in the four vicinities of the central dot 50 is "0 (not to put ink)", then the central dot 50 is referred to as a boundary dot. The result of identifying boundary dots is stored in a boundary-dot table, shown in Fig. 10. Herein, all dots are given with a sign, wherein if a dot is a boundary dot, then "1" is stored for the dot, and if a dot is not a boundary dot, then "0" is stored for the dot. Boundary dots are identified in this manner in order to use the boundary dots to enlarge halftone-dots around the boundary dots, in expressing expansion of halftone dots on the proof, corresponding to dot gains on the print, and in order to adjust the difference in image quality due to the difference in coloring materials between the print and the proof by changing the colors of these boundary dots.

Next, from the halftone-dot percentage table, in Fig. 6, which stores halftone-dot percentages for the respective regions, and referring to the dot gain table, in Fig. 8, dot gains in the respective regions are obtained. Further, from these dot gains, and referring to an added dot-row quantity table, in Fig. 11, the quantity of dot rows to expand halftone-dots in the respective regions are specified (S40).

Herein, the added dot-row quantity table, in Fig. 11, is a table that stores the quantities of dot rows to be added outside the respective halftone-dot boundaries on the proof, that is, the quantity of dot rows where 1 bit data are to be set to "1" so that the halftone-dots are reproduced on the proof, in approximately the same size as the halftone-dots expanded due to dot gain on the print. This data of the numbers of lines is prepared in advance, corresponding to the number of lines of the area coverage modulation image. Accordingly, as the dot gains of the print are larger, the quantities of dot rows to be added outside the halftone-dots on the proof increase, wherein each 1 bit data of these added dot rows is "1". Thus, while maintaining the halftone-dot shapes, the sizes of the halftone-dots on the proof can be made approximately the same as those on the print.

Next, by the use of the quantities of added dot rows in the respective regions specified in step S40 and the boundary-dot table in Fig. 10, half-tone dots of the area coverage modulation image are expanded in the respective regions (S50). Fig. 12 is a schematic diagram showing a part of a such obtained area coverage modulation image 22, corresponding to the part, in Fig. 4. In comparison of Fig. 12 and Fig. 4, it is observed that 1 bit data of each dot is changed from "0 (not to put ink)" to "1 (to put ink)" for each one dot outside the halftone-dot 5. As a result, the halftone-dot 7 has a size larger than that of the halftone-dot 5, reproducing the expansion of the halftone-dot in print. Herein, the series of the steps from S10 to S50 is an example of a halftone-dot percentage adjustment steps that adjust the halftone-dot percentage of the second image.

In the above description, a halftone dot of a print grows, in other words, the quantity of dot row is increased. However, the invention is not limited to this. The invention also includes a case where a halftone dot shrinks, in other words, the quantity of dot row is decreased.

However, it is difficult to reproduce the image quality of the print on the proof only by the above. It is because the coloring materials of prints and those of proofs are different, in general, and the color developing characteristics are also different. Therefore, while a color of dots in the halftone-dot 7 is based on a solid color, a color of the boundary dots identified in the above is made to be an adjusting color. Details will be described below.

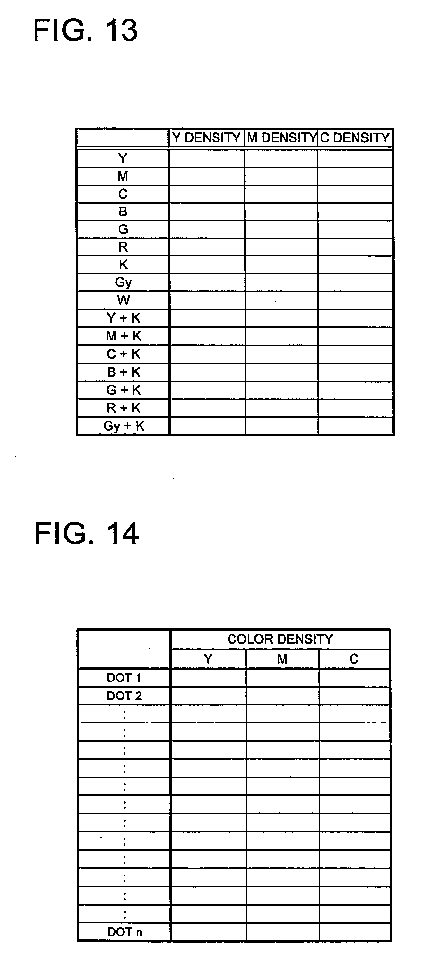

First, in the next step S60, YMC densities of the solid color are specified from a lookup table. A lookup table is a table that stores a so-called device profile of the image forming apparatus 40, and specifies combinations of color densities of YMC which are element colors of silver halide photosensitive materials, wherein the combinations are necessary for reproducing 15 colors of the print on the proof. This table is prepared in the output device as follows. Color developings of the respective layers of Y, M, and C are combined in advance under conditions where the color developings are varied in multiple steps. On color patches produced by exposure and development under these conditions, Y, M, and C densities are measured with the coordinates L*, a*, and b* in a CIELAB color space and in status T. In such a manner, the colors of the print and corresponding data of proper YMC densities are linked and stored. Fig 13 shows an example of such a table. To simplify the description, it is assumed that colors of the print determined by printing conditions are already designated, using the values of the L*a*b* coordinate system. Further, it is also assumed that an area coverage modulation image is obtained for each of all the color plates used in the print.

Next, YMC densities are designated for the respective dots constructing the halftone-dots 7 in Fig. 12, using the lookup table in Fig. 13. Fig. 14 shows an example of an exposure-light table prepared in this manner. In the table in Fig. 14, stored are respective densities of Y, M, and C to be used for the corresponding dots in the output device. Thus, the colors of the dots constructing the halftone-dot 7 correspond with the solid colors of the print.

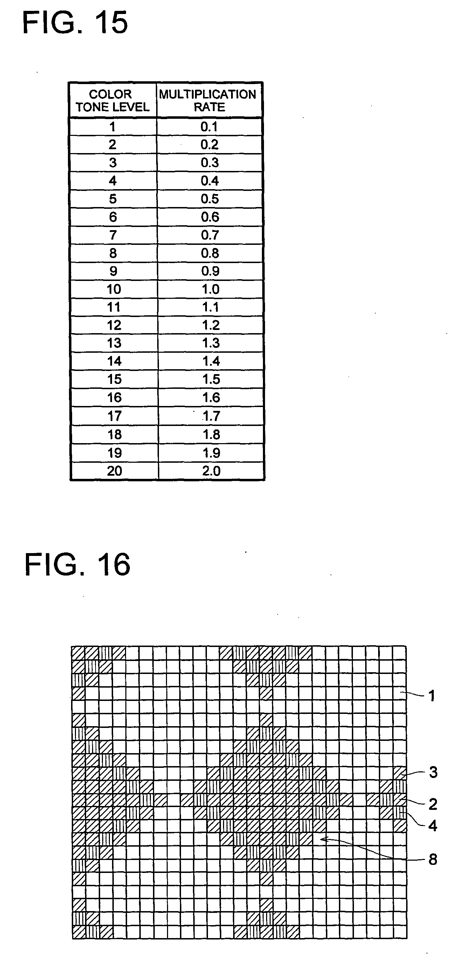

Next, for the boundary pixels of the dots of the halftone-dot 7 in Fig. 12, identified in step S30 and stored in the table in Fig. 10 as the result, a multiplication factor, which has been input in step S10 and corresponds to color level, is read from the multiplication factor table in Fig. 15. This multiplication factor and the YMC densities in the lookup table determine the YMC densities of the adjusting color (step S70).

Predetermined multiplication factors are stored in the multiplication factor table, wherein the factors are from 1.0 to 2.0 corresponding to the color levels. The respective YMC densities specified by the lookup table are multiplied by these multiplication factors, and thus the YMC densities of adjusting colors for solid colors are generated. If a multiplication factor is smaller than 1.0, the color of a boundary pixel is lighter than a solid color. If a multiplication factor is greater than 1.0, the color of a boundary pixel is deeper than a solid color.

Next, YMC density data of the adjusting colors are stored in the YMC density table for respective dots, in Fig. 14, referring to the table in Fig. 10. Thus, the YMC densities of the boundary dots are changed from YMC densities of the solid colors to YMC densities of the adjusting colors (step S80). An area coverage modulation image 23 formed in such a manner is schematically shown in Fig. 16. Fig. 16 is a schematic diagram showing a part which corresponds to the part in Fig. 4 and 12. In comparison of Fig. 12 and Fig. 16, it is observed that, out of the dots of the halftone-dot 7 in Fig. 12, the color of dot 4 located on the halftone-dot boundary, in Fig. 4, is changed in color from a solid color (indicated by hatching) to an adjusted color (indicated by vertical lines). Herein, the series of step S30, step S70, and step S80 is an example of color adjusting process. This adjusts the image quality of the proof so that it conforms to the image quality of the print.

In the image in Fig. 16, both the shape and the size of the halftone-dot are approximation of those in the print. Further, the image quality of the entire image is adjusted to be approximate to that in the print.

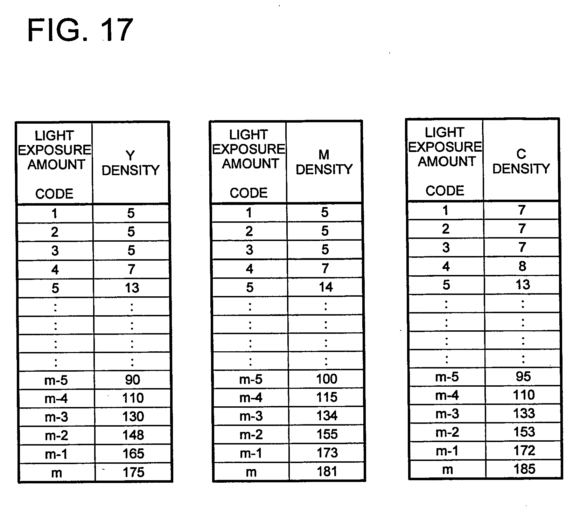

Next, from a light-exposure table, shown in Fig. 17, light-exposure level codes that correspond to the output device, not shown, are specified (step S90), and the light-exposure codes are output to the output device (step S100). In the output device, while respective LEDs of RGB scan a silver halide photosensitive material two dimensionally, the silver halide photosensitive material is exposed to light, according to the light-exposure codes transmitted for respective dots. Then, this exposed silver halide photosensitive material is subjected to developing and fixing by a developing device, not shown. Thus, processing in the image forming apparatus is completed.

For a proof obtained by such an image forming method, the area coverage modulation image via the same RIP as used in the printing machine is used, as it is, in the image forming apparatus 40. Nevertheless, the shapes and the sizes of the halftone-dots and the halftone-dot structures are extremely close to those of the print as a target, and solid colors of halftone-dot 100% can be made almost the same colors. Further, despite the difference in coloring materials, the image quality of the entire image is adjusted to be extremely close to that in the print, thereby achieving a fine proof.

An embodiment of the invention has been described above. However, the invention is not limited to the aforesaid specific example of the invention. For example, although in the above description, the functions of the control device of the image forming apparatus are implemented by a computer program executed on a general-purpose computer, it is needless to say that the function may be realized by dedicated hardware. Further, this program may be stored in a computer-readable storage medium. It is also possible to store such a program in a storage medium by dividing the program into plural parts and respectively storing the divided parts in the storage medium. Herein, the storage medium can be a movable storage medium such as a flexible disk, photo-magnetic disk, ROM, CD-ROM, or a hard disk built- in a computer system, etc.

The other output device may be a printer of an inkjet type or the like which can reproduce colors of almost continuous modulations, according to an inkjet system. Dots to have an adjusting color are not limited to boundary dots of the original halftone-dot, and may be, for example, dots on the periphery of the enlarged halftone-dot 7, shown in Fig. 12, or may be concentrated in the middle of the halftone-dot. Anyway, a solid color can be recognized if an adjusting color is expressed differently from the solid color, and dots of the adjusting color can be disposed in a manner not to cause moire. Further, in the above halftone-dot percentage adjusting step, a halftone-dot is enlarged row by row around the entire periphery. However, dots may be disposed at random in contact with the outer periphery of the halftone-dot, corresponding to a tiny change in the halftone-dot percentage, in order to enlarge the halftone-dot.

Yet further, although in the above description, the multiplication factors are set to the same for each of all the YMC densities, different multiplication factors may be set for the respective colors of Y, M and C, depending on the respective adjusting colors. Further, instead of using a multiplication factor table, it is also possible to prepare another lookup table for the respective adjusting colors. Still further, instead of specifying adjusting colors by inputting color levels, color levels may be determined in advance, according to printing conditions. The screening method is not limited to AM screening, and may be FM screening. The processing flow is not limited to the one shown in Fig. 5, and the order of steps may be changed, if necessary.

### [Example 1]

A silver halide photosensitive material No.1 described in Embodiment 1 in Unexamined Japanese Patent Application Publication TOKKAI No. 2002-341470 was prepared. Further, an image forming apparatus having an exposure section and a developing section were prepared as described in the following. In the exposure section, B-LEDs as a light source are disposed in the main scanning direction in a quantity of 10, wherein the timing of each exposure is a little delayed from one another so that the same place is exposed to light from 10 pieces of LEDs. Further, an exposure head was prepared in such a manner that 10 pieces of LEDs are disposed also in the sub scanning direction so that neighboring 10 dots can be exposed at a time. Also for G and R, prepared were exposure heads in combination of LEDs likewise. The diameter of each beam is approximately 10 microns, and beams were disposed at this interval, wherein the pitch in the sub scanning direction was approximately 100 micron. Exposure time per dot was approximately 100 nanoseconds. Further, the exposure section was prepared in order to perform development of the silver halide photosensitive material after exposure, the development being disclosed in Embodiment 1 of the Patent Application Publication described above.

First, using an area coverage modulation image produced by subjecting a typical full color image to RIP, solid colors in a lookup table were adjusted so that the solid colors become the same as those in a print of the same full color image, while the sizes of halftone-dots of the area coverage modulation image were not adjusted. Thus, a proof was output, using the image forming apparatus. When the proof was viewed, it was observed that the sizes of the halftone-dots on the proof were smaller than the sizes of the halftone-dots on the print by approximately 20%. The dot gain of halftone-dot 50% was measured with this reference, and thus the dot gain table in Fig. 8 and the added dot-row quantity table in Fig. 11 were prepared. Herein, the dot gain at halftone-dot 50% was set to 13%.

Next, proofs with various multiplication factors for adjusting colors were produced, using these tables. A multiplication factor was determined such that the image quality was most approximated to the print. As a result, the density of the adjusting colors was 0.3 lower than the solid colors.

Next, under such determined conditions and using an area coverage modulation image of a print on which moire appears, a proof was produced by the image forming apparatus. In comparison of the proof with the original print, there was obtained a proof having halftone-dot structures, solid colors, and an image quality which were closely approximate to the print.

## Claims

1. An image forming method, comprising:
a first process for outputting a first image from a first output device, using a group of 1 bit data of respective dots of an area coverage modulation image; and
a second process for outputting another image from another output device with an output method different from an output method for the first output device, using the group,
wherein the second process comprises: a halftone-dot percentage adjusting step of adjusting a halftone-dot percentage of a halftone-dot included in the area coverage modulation image; and a color adjusting step of adjusting a color of each dot of the halftone-dot, the other image being approximated to the first image.

2. The image forming method of claim 1, wherein at least two colors are employable at the respective dots for at least one color of the first image.

3. The image forming method of claim 2, wherein one of the two colors has approximately the same color as at least that of the one color of the first image.

4. The image forming method of claim 2, wherein dots of the other one of the two colors are located adjacent to a boundary of the halftone-dot.

5. The image forming method of claim 1, wherein the adjusting of the halftone-dot percentage in the second process is performed, corresponding to the halftone-dot percentage.

6. The image forming method of claim 4, wherein the adjusting of the other color in the second process is performed, according to a multiplication factor applied to a color of a halftone-dot percentage of 100%.

7. The image forming method of claim 5, wherein the adjusting of the other color in the second process is performed, according to a multiplication factor applied to a color of a halftone-dot percentage of 100%.

8. The image forming method of claim 1, wherein the first output device employs ink as a coloring material of the first image, and the other output device employs a silver halide photosensitive material as a coloring material of the other image.
